# EUROPEAN PATENT SPECIFICATION

(11) **EP 3 921 771 B1**
(45) Date of publication and mention of the grant of the patent: **19.03.2025**
(21) Application number: 20753202.9
(22) Date of filing: 31.01.2020
(51) Int. Cl.: G06F 30/10, G06F 30/27, G06Q 10/0875, G06Q 10/10, G06Q 50/08, G06V 10/82, G06V 30/19, G06V 30/422, G06F 30/13, G06N 3/02, G06Q 10/06

(54) **SYSTEM AND METHOD FOR AUTOMATED MATERIAL TAKE-OFF**
SYSTEM UND VERFAHREN ZUR AUTOMATISIERTEN MATERIALABNAHME
SYSTÈME ET PROCÉDÉ POUR RELEVÉ DU MATÉRIEL AUTOMATISÉ

(30) Priority: 07.02.2019 AU 2019900387
(43) Date of publication of application: 15.12.2021
(73) Proprietor: Matrak Shield Pty Ltd, Prahran, VIC 3181 (AU)
(72) Inventor: HODGKINS, Shane, Fitzroy, Victoria 3065 (AU); HODGKINS, Brett, Carlton, Victoria 3053 (AU)
(74) Representative: Tuluca, F. Doina
(86) International application number: PCT/AU2020/050064
(87) International publication number: WO 2020/160595

(56) References cited:
- WO-A1-2017/040120
- US-A1- 2001 037 190
- US-A1- 2002 009 223
- US-A1- 2017 004 361
- US-A1- 2018 032 649
- US-B2- 8 543 902
- LUOTING FU ET AL: "From engineering diagrams to engineering models: Visual recognition and applications", COMPUTER-AIDED DESIGN, ELSEVIER PUBLISHERS BV., BARKING, GB, vol. 43, no. 3, 25 December 2010 (2010-12-25), pages 278 - 292, XP028144142, ISSN: 0010-4485, [retrieved on 20101231], DOI: 10.1016/J.CAD.2010.12.011
- ROHIT RAHUL ET AL: "Automatic Information Extraction from Piping and Instrumentation Diagrams", ARXIV.ORG, CORNELL UNIVERSITY LIBRARY, 201 OLIN LIBRARY CORNELL UNIVERSITY ITHACA, NY 14853, 28 January 2019 (2019-01-28), XP081013290
- YU Y ET AL: "A SYSTEM FOR RECOGNIZING A LARGE CLASS OF ENGINEERING DRAWINGS", IEEE TRANSACTIONS ON PATTERN ANALYSIS AND MACHINE INTELLIGENCE, IEEE COMPUTER SOCIETY, USA, vol. 19, no. 8, 1 August 1997 (1997-08-01), pages 868 - 890, XP000703341, ISSN: 0162-8828, DOI: 10.1109/34.608290
- FU, L. ET AL.: "From engineering diagrams to engineering models: Visual recognition and applications", COMPUTER-AIDED DESIGN, vol. 43, 2011, pages 278 - 292, XP028144142, DOI: 10.1016/j.cad.2010.12.011
- RAHUL, R. ET AL.: "Automatic Information Extraction from Piping and Instrumentation Diagrams", January 2019 (2019-01-01), XP081013290, Retrieved from the Internet <URL:https://www.researchgate.net/publication/330775511_Automatic_Information_Extraction_from_Piping_and_Instrumentation_Diagrams> [retrieved on 20200323]
- JIN, L. ET AL.: "Practical Technique in Conversion of Engineering Drawings to CAD Form", IMTC/98 CONFERENCE PROCEEDINGS, IEEE INSTRUMENTATION AND MEASUREMENT TECHNOLOGY CONFERENCE, vol. 1, 1998, pages 8 - 13, XP010281691, DOI: 10.1109/IMTC.1998.679631
- ABLAMEYKO., S. ET AL.: "Recognition of Engineering Drawing Entities: Review of Approaches", JOURNAL OF IMAGE AND GRAPHICS, vol. 7, no. 4, 2007, pages 709 - 733, XP055228784, DOI: 10.1142/S0219467807002878

## Description

### Technical Field

The present invention relates to a system and method for automated material take-off from drawings.

### Background of Invention

Construction projects can involve hundreds of people during the build phase - including manufacturers, suppliers and installers for a number of different trades associated with the construction project.

Construction projects include a tendering process whereby interested parties tender for job(s) within the construction project. The tender process generally requires interested parties to provide a detailed, itemised list of all materials that need to be manufactured/supplied/installed as part of the project. This list is known as the Bill of Materials (BOM).

In order for interested parties to tender, two-dimensional (2D) drawings of the construction project (generally in PDF format) are provided. From those 2D drawings, a BOM is manually created by one or more individuals analysing the drawings, and identifying the types/quantities of materials used. This process is commonly known as "material take-off".

Material take-off may be carried out by manually measuring, counting, and colouring in all materials on a 2D drawing (often on a paper print out of the PDF). For a large-scale construction project, this may take interested parties involved in the tender process upwards of two days of full-time labour (as well as utilising the services of an experienced estimator). As will be appreciated, the manual nature of the process creates delays as well as enormous risk for miscalculations, which can result in cost overruns during the construction phase.

Attempts have been made to automate material take-off. For example, there exists software that receives architectural 3D models of a construction project (e.g. buildings or the like), which allows users to select pieces of material, and associate them with particular product types. This allows a user to export a list of all materials required for the project, and to track them individually in the 3D model. A drawback of this type of software is that material take-off is still extremely labour intensive and also requires specialised computing skills to use the software. To date, these types of software systems have had extremely low take-up by installation/manufacturing companies.

There also exists software tools that allow users to "digitally" perform manual estimating activities from 2D drawings, such as ticking off/colouring in individual materials to count the total number, or to use a "digital measuring tape" to measure dimensions on the images. This process is almost as manual as traditional pen-and-paper methods (often taking days per project for just a single type of material i.e. glass), and creates a lot of risk of human-error.

It would be desirable to provide a method and system which ameliorates or at least alleviates one or more of the above mentioned problems or provides a useful alternative.

Luoting Fu et al., "From engineering diagrams to engineering models: Visual recognition and applications" in Computer-Aided Design, Elsevier Publishers, 2010, vol.43, no.3, relates to symbol recognition to take image-based engineering diagrams or hand sketches and provide engineering models by way of Convolutional Neural Networks to provide a trainable engineering symbol recognizer where the Convolutional Neural Networks is applied either using a multi-scale sliding window or to isolated pixel clusters obtained through Connected Component Analysis (CCA).

Rohit Rahul et al., "Automatic Information Extraction from Piping and Instrumentation Diagrams", arxiv.org, Cornell University Library, 2019, relates to digitizing and extracting data from piping and instrumentation diagrams which can contain noisy or irrelevant information, and utilises deep learning to identify and isolate pipeline codes, pipelines, inlets and outlets, and to detecting symbols from these diagrams and to thereby create a tree like data structure of the piping schematics

Yu Y et al., "A system for recognizing a large class of engineering drawings", IEEE Transactions on Pattern Analysis and Machine Intelligence, 1997, vol.19, no.8, discloses a system for recognizing symbols and connection lines in drawings such as flowcharts, logic and electrical circuits, and chemical plant diagrams by way of (1) rules, which are used to segment symbols from connection lines in the drawing image, the image being thinned, vectorized, and pre-processed in routine ways and (2) a drawing understanding subsystem in concert with the rules (1) to classify symbols and correct errors.

A reference herein to a patent document or other matter which is given as prior art is not to be taken as an admission that that document or matter was known or that the information it contains was part of the common general knowledge as at the priority date of any of the claims.

### Summary of Invention

According to a first aspect, the present invention provides, a system for determining material take-off from a 2D drawing, the system including: a pre-processing component operable to receive and pre-process one or more 2D drawings to provide one or more processed images; a categoriser component operable to receive the processed image from the pre-processing component, the categoriser component including one or more pre trained convolutional neural networks, the categoriser component operable to determine the type of the processed image from one or more categories of drawing types in order to match category of drawing-types with the appropriate one or more pre-trained neural networks; a material identifier component operable to receive the category of drawing-types, and determine the suitable pre-trained neural network to apply to the processed image, and provide a multi-dimension matrix of values associated with the processed image wherein each value in the multi-dimension matrix represents the probability that a feature in the processed image is present and to generate one or more multi-dimension probability matrix (MPMs) for the processed image; an MPM decoding component operable to decode the one or more MPMs generated by the material identifier component to produce one or more data objects for each feature found in the processed image; and an output component operable to provide one or more of: a unique identifier for each feature; a list of coordinates indicating the location of the feature on the processed image; and/or a list of coordinates describing the location of any text or other encoded information that is associated with the feature.

Preferably, the pre-processing component is further operable to convert the 2D drawing to one or more of: a predetermined format, size and aspect ratio. The 2D drawing may take any format and for example may be one or more of a pdf, jpg, dwg file. Preferably, the size of the 1024 x 1024 pixels but it will be appreciated that any size could be used depending on the application.

Preferably, the pre-processing component further includes an image rescaling component operable to normalise the processed image.

It will be appreciated that the one or more convolutional neural networks may include an input layer of predetermined dimensions. The input layer may be, for example, 1024 x 1024 x 3 layers.

The one or more convolutional neural networks may include one or more of convolutional layers containing one or more nodes, the one or more nodes each having one or more weights and biases. The one or more convolutional layers may also correspond to the number of supported drawing types.

Preferably, the material identifier component includes one or more pre-trained material identifying neural networks. The one or more pre-trained material identifying neural networks are preferably trained to produce a multi-dimensional matrix of values.

Preferably, the MPM represents one or more of the numbers, types, physical location and dimension of each feature associated with the processed image; and the MPM being encoded in the values assigned to each X and Y pixel coordinate on the drawing.

It will be appreciated that the feature may take any form and could include one or more of a material, parts of the structure including walls & rooms, furniture or other elements visible on the drawings.

Preferably, the MPM decoding component is operable to scan each coordinate represented in the MPM and to determine if one or more coordinates in the processed image contains one or more of: (a) a material; (b) no material; or (c) the edge of a new material. The MPM decoding component may be further operable to scan adjacent coordinates and check the values for each adjacent coordinate thereby determining borders and/or associated text or other property types which are represented by the MPM.

Preferably, the system further includes a post-processing component operable to perform checks on the data to improve operation of the system. The post-processing component may include an OCR subsystem component operable to runs an optical character recognition process over the coordinate locations associated with the features which were identified by the MPM.

Preferably, the post-processing component further includes a quality assurance subsystem component operable to provide a user a review of the output by the MPM decoding component. The quality assurance subsystem component provides an interactive processed image where coordinates for each feature identified on the drawing are used to render highlighting on the features for easy of identification. The quality assurance subsystem component may include the BOM for the drawing rendered in a table which can be edited by a user such that new features may be added to the BOM table if they were omitted by the system.

Preferably, the quality assurance subsystem component includes a draw/drag/erase tool that allows the user to create/modify/delete coordinates on the processed image.

Preferably the system further includes a training data component which receives the 2D drawings together with the generated BOMs via the MPM decoder; the 2D drawings together with the generated BOMs via the MPM decoder being fed back into a training data set for the current features.

According to a second aspect, the present invention provides, a method for determining material take-off from a 2D drawing, the method including the steps of: receiving and pre-processing one or more 2D drawings to provide one or more processed images; determining the type of the processed image from one or more categories of drawing types by way of one or more pre trained convolutional neural networks and determine the type of the processed image from one or more categories of drawing types in order to match category of drawing-types with the appropriate one or more pre-trained neural networks; receiving the category of drawing-types, and determining the pre-trained neural network to apply to the processed image; providing a multi-dimension matrix of values associated with the processed image wherein each value in the multi-dimension matrix represents the probability that a feature in the processed image is present; generating one or more multi-dimension probability matrix (MPMs) for the processed image; decoding the one or more MPMs produce one or more data objects for each feature found in the processed image; and outputting one or more of: a unique identifier for each feature; a list of coordinates indicating the location of the feature on the processed image; and/or a list of coordinates describing the location of any text or other encoded information that is associated with the feature.

### Brief Description of Drawings

The invention will now be described in further detail by reference to the accompanying drawings. It is to be understood that the particularity of the drawings does not superseded the generality of the preceding description of the invention.
Figure 1 is a schematic diagram of an example network that can be utilised to give effect to the system according to an embodiment of the invention;
Figure 2 is flow diagram illustrating the process steps adopted by the system and method for automated material take-off in accordance with an exemplary embodiment of the present invention; and
Figure 3 is flow diagram illustrating the process steps adopted by the system and method for automated material take-off in accordance with an another exemplary embodiment of the present invention.

### Detailed Description

The present invention may be utilised by users working in the construction sector, and it will be convenient to describe the invention in relation to that exemplary, but non-limiting, application. It will be appreciated that the present invention is not limited to that application and may for example, be applied in electronics fabrication, clothing design & manufacture, or anywhere that design drawings are currently analysed by humans.

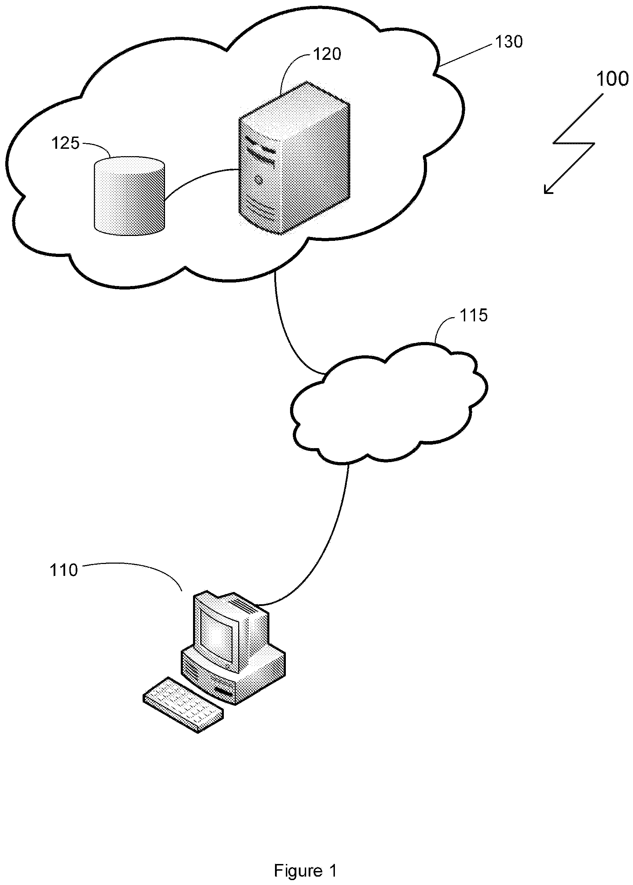

Referring to Figure 1, there is shown a diagram a system 100 for automated material take-off with devices making up the system, in accordance with an exemplary embodiment of the present invention. The system 100 includes one or more servers 120 which include one or more database 125 and one or more computing devices 110 (associated with a user for example) communicatively coupled to a cloud computing environment 130, "the cloud" and interconnected via a network 115 such as the internet or a mobile communications network.

Although "cloud" has many connotations, according to embodiments described herein, the term includes a set of network services that are capable of being used remotely over a network, and the method described herein may be implemented as a set of instructions stored in a memory and executed by a cloud computing platform. The software application may provide a service to one or more servers 120, or support other software applications provided by a third party servers. Examples of services include a website, a database, software as a service, or other web services. Computing devices 110 may include smartphones, tablets, laptop computers, desktop computers, server computers, among other forms of computer systems.

The transfer of information and/or data over the network 115 can be achieved using wired communications means or wireless communications means. It will be appreciated that embodiments of the invention may be realised over different networks, such as a MAN (metropolitan area network), WAN (wide area network) or LAN (local area network). Also, embodiments need not take place over a network, and the method steps could occur entirely on a client or server processing system.

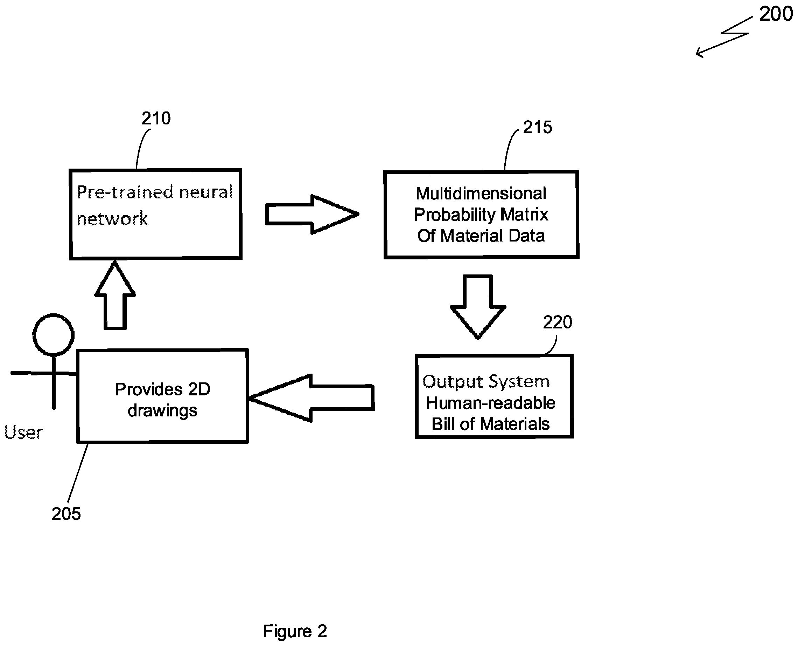

Referring now to Figure 2, there is shown a flowchart illustrating the process steps 200 adopted by the system and method for automated material take-off in accordance with an exemplary embodiment of the present invention. The method begins at step 205 where a user associated with, for example the computing device 110 of Figure 1 provides 2D drawings which may be uploaded to the server 120 and stored on database 125 in cloud 130.

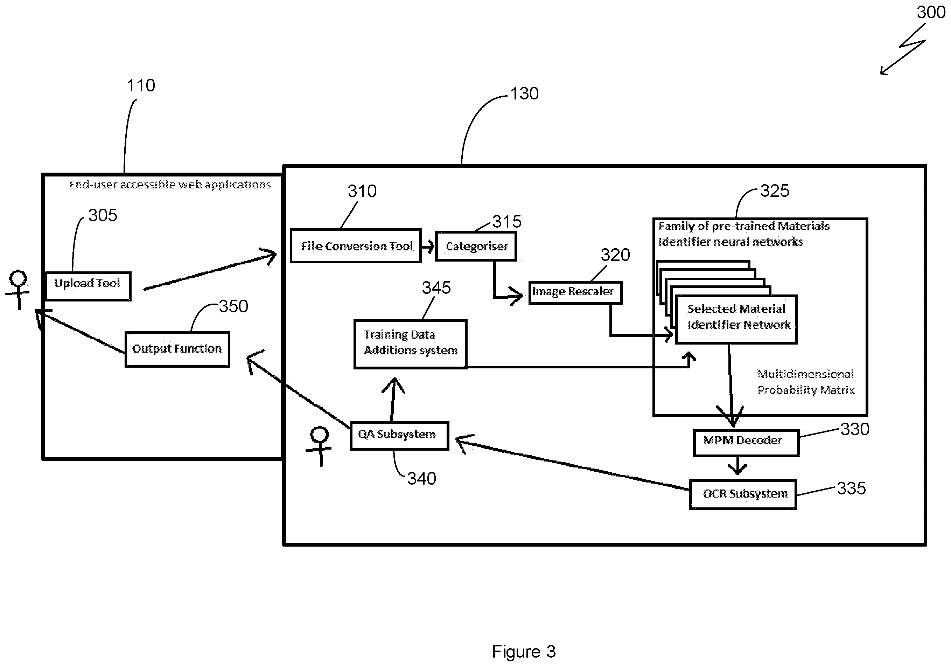

The 2D drawings may be provided by the user in any number of formats including pdf, jpg, dwg and the like. Control then moves to step 210 where the 2D drawings are provided to a pre-trained neural network. The pre-trained neural network may exist on server 120 or database 125 and may be pre-trained using a traditional, supervised approach. For example sample construction drawings of a specific type may be provided (i.e. shop drawings for pieces of aluminium cladding, elevations, electrical designs, etc.) as well as human-generated examples of data-abstractions of the BOM for example. As will be described further with reference to Figure 3, the pre-trained neural network may take any number of forms. The pre-trained neural network at step 210 processes the data from the 2D drawings. Control then moves to step 215 where the neural network generates an abstraction of the BOM.

At steps 210 and 215 at each step of the training process for training the neural network, each layer of a machine learning algorithm receives an input and provides an output based on weights and biases associated with each node in the layer. The final layer produces a generated multi-dimensional probability matrix (MPM) which is compared against the human created examples of MPM, as will be appreciated by those skilled in the art. The difference between the machine generated and human generated MPMs provides a loss function which allows the weights and biases to be updated for all nodes in the network, such that future machine generated MPMs will be increasingly similar to the human generated version. By way of many thousands of generations of training across hundreds of examples of training data machine generated MPMs will converge on the human generated versions providing the ability to generate a BOM without human oversight.

Once the MPM has been produced, control moves to step 220 where an output component processes the MPM into a human-readable BOM.

Advantageously, other than providing the 2D drawings the user requires, no interaction with the system is required and the user associated with computing device 110 and receives the result which is the BOM that they can then use as part of their tender process or the like or to order the materials they require knowing that the BOM is accurate.

Figure 3 is a flow chart 300 illustrating the process steps adopted by the system and method for automated material take-off in accordance with a further exemplary embodiment of the present invention. Control starts at step 305 where the user associated with computing device 110 uploads one or more 2D drawings to the cloud 130 which contains the server 120 and database 125 where the system 100 may process the 2D drawing. Upload step 305 may be carried out via a simple web-based application which allows the user associated with the computing device 110 to upload files to a cloud-based computing system 130 capable of performing the calculations and storing both files and metadata. All subsequent operations may then be performed in the cloud 130. The cloud 130 may include both virtual and physical computers networked together, may connect two or more databases for the purposes of sharing data between network computers and may have access to networked storage locations for the purposes of storing/sharing files between components.

Control then moves to step 310, 315 and 320 which may be considered to be part of a pre-processing component. At step 310 the uploaded file from step 315 is converted to a format which is a standard size and aspect ratio. The drawings may take the form of pdf, jpg, dwg or the like but the conversion step uses a 1024 x 1024 pixel image size. It will be appreciated that any size may be provided. The conversion is due to the neural-network requiring a consistent size for all images it processes. Control then moves to step 315 where a categoriser component contains a pre-trained convolutional neural network, which may be built using the methods known to the skilled person to provide:
- An input layer of 1024 x 1024 x 3 layers.
- A number of convolutional layers which contain nodes with "weights" and "biases" in line with machine learning as will be appreciated by those skilled in the art. The number of layers is based on the number of drawing categories supported by the system and method of the present invention. It will be appreciated that this can be extended and the number and type of intermediary layers may be varied.
- One fully connected layer outputting values of zero or one across an array of nodes, which represents the different "categories" of drawings that are supported by the system and method of the present invention.

As will be appreciated, the purpose of the categorising component is to determine which type of 2D construction drawing has been uploaded by the user in order to provide specific processors depending on the drawing type. For example, a particular type of 2D drawing may show only the structural steel components for a project, where another one shows the ventilation or plumbing.

This is due to the fact that a single feature (i.e. a door) appears differently depending on the type of drawing it appears. For example a technical specification of a door construction will look different to a floorplan which will look different again to a forward-facing "elevation" drawing on the front of a building. Advantageously, the categorising component makes this determination automatically. This is done by way of training the network on a pre-categorised list of thousands of drawings based on which features they contain and whether they show the side, the front, internals, or overhead view of a building, or whether they show a detailed/component level of specific features (i.e. in the case of a feature being one or more materials, this could include cladding, structural steel, modular bathrooms fixtures and the like). Advantageously, this aspect of the invention obviates the need for a user to select which type of drawing they are uploading but rather simply upload the drawing.

Control then moves to step 320 where an image rescaling component normalises the images of the 2D drawings for processing. Preferably the drawings are converted to a 1024 x 1024 pixel image but it will be apparent that any image resolution may also be applicable depending on the application. Control then moves to the material identifier component 325 which is a family of pre-trained material identifying neural networks. Each of these neural networks are trained to receive a single 2D drawing image of a specific type (i.e. elevations, floorplans, etc.) and for a particular type of feature (i.e. a particular material or structure, for example, a window), the neural network is trained to produce a multi-dimension matrix of values, where each value represents the probability that a particular feature of a given feature (i.e. the edge of a window or the centre of a piece of steel) appears and gives coordinates set in the 2D drawing. Each of these sets of outputs may be denoted as a MPM.

At step 325 the MPM takes the form of a 1024 x 1024 x 255 x 3 array of integers which represents the pixel coordinates of the input data (1024 x 1024 with 255 x 3) representing the probability that specific trained features of the features are present in the current pixel of the 2D drawing.

In one embodiment some of the features encoded into MPM are as follows:
- Edge of the feature: (255, 255, 255)
- Middle of the feature: (0, 0, 255)
- No feature present: (0, 0, 0)
- Text representing information pertinent to the feature: (0, 255, 0).

As will be appreciated, each of the above are distinct values from one another and for example, if the pixel in location 50 on the X axis and 200 on the Y axis represents the centre of the feature this may be recorded such that [50, 200] equals [0, 0, 255].

This is just one example of an encoding of what would be tens or hundreds of thousands and it would be appreciated that any number of encodings could be created, representing different properties of the features on a 2D drawing. For example, using different values to encode corners, common symbols or curves and the like. It will be appreciated that the specific encodings may vary drastically between features and drawings types and are relatively arbitrary provided they capture of the pertinent information for features on a given drawing type.

Advantageously the MPM of a 2D drawing represents an abstracted encoding of a BOM in that the numbers, types, physical location and dimension of each feature on the drawing are encoded in the values assigned to each X and Y pixel coordinate on the drawing.

The neural networks in the material identifier component 325 may be trained by providing pre-constructed MPMs. In this way, the material identifier component 325 "learns" to generate its own MPMs based on previously unknown types of construction drawings. The values in the MPMs generated by the material identifier component reflect the probability of particular features being in a specific pixel location - for instance, using the encoding above, [30,60] = (0,0,127), may represent that the material identifier component 325 has a roughly 50% confidence that the specific pixel represents the centre of a feature.

In this implementation, the individual neural network models within the material identifier component 325 may include a common type of machine learning algorithm, known as adversarial networks. These networks will be familiar to a skilled person and consist of a "generator" and a "discriminator", which are themselves two separate machine learning networks.

As will be understood to a skilled person, the generator is a machine learning algorithm which receives an input (in this case, a 2D drawing), and uses this to generate novel examples of the desired output (in this case the MPM). This is then passed to the discriminator, along with a pre-prepared version of the ideal output (the "correct" MPM), which must choose which is the "real" output. Two loss functions are calculated, such that, whenever the discriminator successfully detects the "incorrect" MPM created by the generator, the discriminator receives positive reinforcement, and the generator does not. Alternatively, if the discriminator is "fooled" into selecting the MPM created by the generator, then the generator receives the positive reinforcement, and the discriminator does not.

As will be appreciated, over time, this leads to the generator becoming increasingly skilled at creating outputs that match the human-created, ideal MPMs for a particular 2D drawing, while the discriminator becomes ever-better at identifying the human-created ones from the "fakes". Ultimately, this results in the generator becoming so good, that the MPMs it generates are almost indistinguishable from the human-created ones. Advantageously, given MPMs represent an abstract encoding of the BOM, this means the material identifier component 325 is ultimately able to "read" a 2D drawing, and output a list of all features present in the drawing, including dimensions, categories, and other pertinent information present in the training data set.

Control then moves to step 330 where an MPM decoding component decodes the MPM generated by a material identifier component to produce a simple data object for each feature found in the 2D drawing. This process involves scanning through each coordinate represented in the MPM data and performing a simple check to determine if it contains a feature, no feature or the edge of a new feature and the like. Once the new features are located in the MPM, the MPM decoder scans adjacent coordinates and checks the values for each adjacent coordinate in a way that is allows it determine the borders and associated text or other property types which are represented by the MPM.

For each feature located in this matter, the details captured are stored by the MPM decoding component. The MPM decoding component for each of the one or more feature data objects being outputted provides:
- a unique identifier for each feature;
- a list of coordinates describing where the feature physically appears on each drawing;
- a list of coordinates describing the location of any text or other encoded information that is associated with the feature.

Control then moves to post-processing components 335, 340 and 345 which perform checks on the data and/or improves the overall system 100.

At step 335 an Optical Character Recognition (OCR) subsystem component runs an optical character recognition algorithm over the coordinate locations associated with the individual features which were generated at step 325 and 330, any text identified by the OCR subsystem component may then be stored with the feature data object for ultimate display to the user, which will be described further below. The OCR subsystem component may be utilised to check text which appears on the drawing, but preferably it is further operable to associate that text with the features located in the drawing based on their location in the drawing. For example, the OCR subsystem component may "read" the widths of a feature which appears on the drawings thereby knowing which feature that width applies to.

Control then moves to step 340 in which a quality assurance subsystem component provides an opportunity for an individual user or a group of users to review the output from step 330, that is the BOM data against each of the 2D drawings to verify their integrity before providing the finally BOM to the end user associated with computing device 110. The Quality Assurance (QA) subsystem component may be, for example, a web based application which allows the user to be presented with:
- an interactive version of the original 2D drawing where coordinates for each feature identified on the drawing are used to render highlighting on the features for easy of identification;
- the complete BOM for that drawing page being rendered in a table which can be edited by a QA system operator, such that new features may be added to the BOM table if they were missed by the automated system;
- a simple draw/drag/erase tool that allows the QA system operator to create/modify/delete coordinates on the 2D drawing. If any of the features were identified incorrectly or were missing from the final BOM;
- a simple draw measurement tool which allows the QA system operator to set a sample of the scale of the drawing (i.e. 20 pixels = 150mm). Advantageously this allows pixel coordinates associated with each feature to be used to calculate real-world dimensions with a physical feature which can then be saved to the BOM;
- an "approved" button which commits the BOM and allows it to be sent to the computing device 110.

Advantageously, the user can edit or correct and that edit/correction is learned by the system, providing improved accuracy and the like over time.

Control then moves to step 345 which is a training data component which may receive as input, 2D drawings which were provided at step 305 together with BOMs which have been output via the MPM decoder at step 330 which are then fed back into the training data set for the current materials identifier at step 325. In this way, the materials identifier component is provided with an ever-increasing set of training data allowing it to learn from mistakes identified by the QA subsystem at step 340. Otherwise, control moves to step 350 in which an output component provides the completed BOM to the end user associated with computing device 110.

In this embodiment, the BOM is provided to the user in the form of an interactive web application which allows then to search/view/edit any individual feature listed in the BOM. The user may additionally be provided with an interactive version of their 2D drawings where the coordinates identified in the BOM allow highlights of the features to be digitally rendered over the 2D drawing. The BOM may be provided in any number of formats to the end user as will be appreciated by those skilled in the art.

Where the terms "comprise", "comprises", "comprised" or "comprising" are used in this specification (including the claims) they are to be interpreted as specifying the presence of the stated features, integers, steps or components, but not precluding the presence of one or more other features, integers, steps or components, or group thereof.

While the invention has been described in conjunction with a limited number of embodiments, it will be appreciated that the invention is defined by the appended claims.

## Claims

1. A system for determining material take-off from a 2D drawing, the system including:
a pre-processing component operable to receive and pre-process one or more 2D drawings to provide one or more processed images;
a categoriser component operable to receive the processed image from the pre-processing component, the categoriser component including one or more pre-trained convolutional neural networks, the categoriser component operable to determine the type of the processed image from one or more categories of drawing types in order to match category of drawing-types with appropriate one or more pre-trained material identifying neural networks;
a material identifier component operable to receive the category of drawing-types, and determine suitable pre-trained material identifying neural network to apply to the processed image, and generate a multi-dimension matrix of values associated with the processed image wherein each value in the multi-dimension matrix represents the probability that a feature in the processed image is present and to generate one or more of such a multi-dimension matrix as one or more multi-dimension probability matrices denoted MPMs for the processed image;
an MPM decoding component operable to decode the one or more MPMs generated by the material identifier component to produce one or more data objects for each feature found in the processed image; and
an output component operable to provide one or more of: a unique identifier for each feature; a list of coordinates indicating the location of the feature on the processed image; and/or a list of coordinates describing the location of any text or other encoded information that is associated with the feature.

2. The system of claim 1, wherein the pre-processing component further includes an image rescaling component operable to normalise the processed image.

3. The system of claim 1, wherein the one or more convolutional neural networks include an input layer of predetermined dimensions.

4. The system of claim 1, wherein the one or more convolutional neural networks include one or more of convolutional layers containing one or more nodes, the one or more nodes each having one or more weights and biases.

5. The system of claim 4, wherein the one or more convolutional layers correspond to the number of supported drawing types.

6. The system of claim 1, wherein the material identifier component includes one or more pre-trained material identifying neural networks.

7. The system of claim 6, wherein the one or more pre-trained material identifying neural networks is trained to produce a multi-dimensional matrix of values.

8. The system of claim 1, wherein the MPM represents one or more of the numbers, types, physical location and dimension of each feature associated with the processed image; and the MPM being encoded in the values assigned to each X and Y pixel coordinate on the drawing.

9. The system of claim 1, wherein the feature includes one or more of a material, structural element including walls or rooms, or other elements such as furniture that appear in the drawings.

10. The system of claim 1, wherein the MPM decoding component is operable to scan each coordinate represented in the MPM and to determine if one or more coordinates in the processed image contains one or more of: (a) a material; (b) no material; or (c) the edge of a new material.

11. The system of claim 10, wherein the MPM decoding component is further operable to scan adjacent coordinates and check the values for each adjacent coordinate thereby determining borders and/or associated text or other property types which are represented by the MPM.

12. The system of claim 1, wherein the post-processing component includes an OCR subsystem component operable to runs an optical character recognition process over the coordinate locations associated with the features which were identified by the MPM.

13. The system of claim 1, wherein a quality assurance subsystem component provides an interactive processed image where coordinates for each feature identified on the drawing are used to render highlighting on the features for easy of identification.

14. The system of claim 1, wherein the system further includes a training data component which receives the 2D drawings together with the generated BOMs via the MPM decoder; the 2D drawings together with the generated BOMs via the MPM decoder being fed back into a training data set for the current features.

15. A method for determining material take-off from a 2D drawing, the method including the steps of:
receiving and pre-processing one or more 2D drawings to provide one or more processed images;
determining the type of the processed image from one or more categories of drawing types by way of one or more pre-trained convolutional neural networks and determine the type of the processed image from one or more categories of drawing types in order to match category of drawing-types with appropriate one or more pre-trained material identifying neural networks;
receiving the category of drawing-types, and determining a pre-trained material identifying neural network to apply to the processed image;
generating a multi-dimension matrix of values associated with the processed image wherein each value in the multi-dimension matrix represents the probability that a feature in the processed image is present;
generating one or more of such a multi-dimension matrix as one or more multi-dimension probability matrices denoted MPMs for the processed image;
decoding the one or more MPMs produce one or more data objects for each feature found in the processed image; and
outputting one or more of: a unique identifier for each feature; a list of coordinates indicating the location of the feature on the processed image; and/or a list of coordinates describing the location of any text or other encoded information that is associated with the feature.

## Patentansprüche

1. Ein System zur Ermittlung des Materialbedarfs aus einer 2D-Zeichnung, wobei das System Folgendes umfasst:
Eine **Vorverarbeitungskomponente,** die eine oder mehrere 2D-Zeichnungen empfangen und vorverarbeiten kann, um eine oder mehrere verarbeitete Bilder bereitzustellen;
Eine **Kategorisierungskomponente,** die das verarbeitete Bild von der Vorverarbeitungskomponente empfängt, wobei die Kategorisierungskomponente ein oder mehrere vortrainierte konvolutionale neuronale Netze enthält, die dazu in der Lage sind, den Typ des verarbeiteten Bildes aus einer oder mehreren Kategorien von Zeichnungstypen zu bestimmen, um den Zeichnungstyp mit einem oder mehreren geeigneten vortrainierten materialidentifizierenden neuronalen Netzen abzugleichen;
Eine **Materialidentifizierungskomponente,** die die Kategorie der Zeichnungstypen empfängt, ein geeignetes vortrainiertes materialidentifizierendes neuronales Netz bestimmt, das auf das verarbeitete Bild angewendet werden soll, und eine mehrdimensionale Matrix von Werten erzeugt, die mit dem verarbeiteten Bild assoziiert sind, wobei jeder Wert in der mehrdimensionalen Matrix die Wahrscheinlichkeit darstellt, dass ein Merkmal im verarbeiteten Bild vorhanden ist, und eine oder mehrere solcher mehrdimensionalen Matrizen als mehrdimensionale Wahrscheinlichkeitsmatrizen (MPMs) für das verarbeitete Bild erzeugt werden;
Eine **MPM-Dekodierungskomponente,** die die von der Materialidentifizierungskomponente erzeugten MPMs dekodieren kann, um ein oder mehrere Datenobjekte für jedes in dem verarbeiteten Bild gefundene Merkmal zu erzeugen; und
Eine **Ausgabekomponente,** die eine oder mehrere der folgenden Informationen bereitstellen kann: eine eindeutige Kennung für jedes Merkmal; eine Liste von Koordinaten, die die Position des Merkmals im verarbeiteten Bild angeben; und/oder eine Liste von Koordinaten, die den Standort von Text oder anderen kodierten Informationen beschreiben, die mit dem Merkmal verknüpft sind.

2. Das System nach Anspruch 1, wobei die Vorverarbeitungskomponente ferner eine **Bildskalierungskomponente** umfasst, die das verarbeitete Bild normalisiert.

3. Das System nach Anspruch 1, wobei das eine oder die mehreren konvolutionalen neuronalen Netze eine Eingabeschicht mit vorgegebenen Dimensionen umfassen.

4. Das System nach Anspruch 1, wobei das eine oder die mehreren konvolutionalen neuronalen Netze eine oder mehrere **Faltungsschichten** mit einer oder mehreren Knoten enthalten, wobei jeder Knoten eine oder mehrere Gewichtungen und Verzerrungen aufweist.

5. Das System nach Anspruch 4, wobei die eine oder die mehreren Faltungsschichten der Anzahl der unterstützten Zeichnungstypen entsprechen.

6. Das System nach Anspruch 1, wobei die Materialidentifizierungskomponente eine oder mehrere **vortrainierte materialidentifizierende neuronale Netze** umfasst.

7. Das System nach Anspruch 6, wobei das eine oder die mehreren vortrainierten materialidentifizierenden neuronalen Netze darauf trainiert sind, eine mehrdimensionale Matrix von Werten zu erzeugen.

8. Das System nach Anspruch 1, wobei die MPM eine oder mehrere der folgenden Informationen darstellt: Anzahl, Typen, physische Position und Dimension jedes Merkmals, das mit dem verarbeiteten Bild assoziiert ist; und die MPM in den Werten kodiert ist, die jedem X- und Y-Pixelkoordinatenpunkt der Zeichnung zugewiesen sind.

9. Das System nach Anspruch 1, wobei das Merkmal eines oder mehrere der folgenden Elemente umfasst: Material, strukturelle Elemente wie Wände oder Räume oder andere Elemente wie Möbel, die in den Zeichnungen erscheinen.

10. Das System nach Anspruch 1, wobei die MPM-Dekodierungskomponente jede in der MPM dargestellte Koordinate scannt und bestimmt, ob eine oder mehrere Koordinaten im verarbeiteten Bild Folgendes enthalten: (a) ein Material; (b) kein Material; oder (c) die Grenze eines neuen Materials.

11. Das System nach Anspruch 10, wobei die MPM-Dekodierungskomponente ferner angrenzende Koordinaten scannt und die Werte für jede angrenzende Koordinate überprüft, um Grenzen und/oder zugehörigen Text oder andere Eigenschaftstypen zu bestimmen, die durch die MPM dargestellt werden.

12. Das System nach Anspruch 1, wobei die Nachverarbeitungskomponente eine **OCR-Subsystemkomponente** umfasst, die einen optischen Zeichenerkennungsprozess über die mit den durch die MPM identifizierten Merkmalen assoziierten Koordinaten durchführt.

13. Das System nach Anspruch 1, wobei eine **Qualitätssicherungskomponente** ein interaktives verarbeitetes Bild bereitstellt, bei dem die Koordinaten für jedes auf der Zeichnung identifizierte Merkmal zur Hervorhebung der Merkmale für eine einfache Identifikation verwendet werden.

14. Das System nach Anspruch 1, wobei das System ferner eine **Trainingsdatenkomponente** umfasst, die die 2D-Zeichnungen zusammen mit den durch den MPM-Dekoder generierten Stücklisten (BOMs) empfängt; die 2D-Zeichnungen und die generierten BOMs werden in einen Trainingsdatensatz für die aktuellen Merkmale zurückgespeist.

15. Ein Verfahren zur Ermittlung des Materialbedarfs aus einer 2D-Zeichnung, wobei das Verfahren folgende Schritte umfasst:
Empfangen und Vorverarbeiten einer oder mehrerer 2D-Zeichnungen zur Bereitstellung eines oder mehrerer verarbeiteter Bilder;
Bestimmen des Typs des verarbeiteten Bildes aus einer oder mehreren Kategorien von Zeichnungstypen mittels eines oder mehrerer vortrainierter konvolutionaler neuronaler Netze;
Empfangen der Kategorie der Zeichnungstypen und Bestimmen eines vortrainierten materialidentifizierenden neuronalen Netzes zur Anwendung auf das verarbeitete Bild;
Erzeugen einer mehrdimensionalen Matrix von Werten, die mit dem verarbeiteten Bild assoziiert sind, wobei jeder Wert in der Matrix die Wahrscheinlichkeit darstellt, dass ein Merkmal im verarbeiteten Bild vorhanden ist;
Generieren einer oder mehrerer solcher mehrdimensionalen Matrizen als MPMs für das verarbeitete Bild;
Dekodieren der MPMs zur Erzeugung eines oder mehrerer Datenobjekte für jedes im verarbeiteten Bild gefundene Merkmal; und
Ausgabe einer oder mehrerer der folgenden Informationen: eine eindeutige Kennung für jedes Merkmal, eine Liste von Koordinaten zur Position des Merkmals oder eine Liste von Koordinaten, die den Standort von Text oder kodierten Informationen beschreiben, die mit dem Merkmal verknüpft sind.

## Revendications

1. Un système de détermination des besoins en matériaux à partir d'un dessin 2D, le système comprenant :
Un **composant de prétraitement** capable de recevoir et de prétraiter un ou plusieurs dessins 2D afin de fournir une ou plusieurs images traitées ;
Un **composant de catégorisation,** recevant l'image traitée du composant de prétraitement, comprenant un ou plusieurs réseaux neuronaux convolutifs pré-entraînés capables de déterminer le type de l'image traitée parmi une ou plusieurs catégories de types de dessins, afin d'associer le type de dessin à un ou plusieurs réseaux neuronaux d'identification de matériaux pré-entraînés appropriés ;
Un **composant d'identification des matériaux,** recevant la catégorie des types de dessins, déterminant un réseau neuronal pré-entraîné d'identification de matériaux approprié à appliquer à l'image traitée, et générant une matrice multidimensionnelle de valeurs associées à l'image traitée, chaque valeur dans la matrice représentant la probabilité qu'une caractéristique soit présente dans l'image traitée, et générant une ou plusieurs matrices de probabilité multidimensionnelles (MPMs) pour l'image traitée ;
Un **composant de décodage MPM,** capable de décoder les MPMs générées par le composant d'identification des matériaux afin de produire un ou plusieurs objets de données pour chaque caractéristique trouvée dans l'image traitée ; et
Un **composant de sortie,** capable de fournir une ou plusieurs des informations suivantes : un identifiant unique pour chaque caractéristique ; une liste de coordonnées indiquant l'emplacement de la caractéristique sur l'image traitée ; et/ou une liste de coordonnées décrivant l'emplacement de tout texte ou autre information codée associée à la caractéristique.

2. Le système selon la revendication 1, où le composant de prétraitement comprend également un **composant de mise à l'échelle de l'image** capable de normaliser l'image traitée.

3. Le système selon la revendication 1, où un ou plusieurs réseaux neuronaux convolutifs comprennent une couche d'entrée de dimensions prédéfinies.

4. Le système selon la revendication 1, où un ou plusieurs réseaux neuronaux convolutifs comprennent une ou plusieurs **couches de convolution** contenant un ou plusieurs nœuds, chaque nœud ayant un ou plusieurs poids et biais.

5. Le système selon la revendication 4, où une ou plusieurs couches de convolution correspondent au nombre de types de dessins pris en charge.

6. Le système selon la revendication 1, où le composant d'identification des matériaux comprend un ou plusieurs **réseaux neuronaux d'identification de matériaux pré-entraînés.**

7. Le système selon la revendication 6, où un ou plusieurs réseaux neuronaux d'identification de matériaux pré-entraînés sont entraînés à produire une matrice multidimensionnelle de valeurs.

8. Le système selon la revendication 1, où la MPM représente une ou plusieurs des informations suivantes : le nombre, les types, l'emplacement physique et la dimension de chaque caractéristique associée à l'image traitée ; et la MPM étant encodée dans les valeurs assignées à chaque coordonnée pixel X et Y du dessin.

9. Le système selon la revendication 1, où la caractéristique comprend un ou plusieurs des éléments suivants : matériau, éléments structurels tels que des murs ou des pièces, ou autres éléments comme des meubles apparaissant dans les dessins.

10. Le système selon la revendication 1, où le composant de décodage MPM scanne chaque coordonnée représentée dans la MPM et détermine si une ou plusieurs coordonnées dans l'image traitée contiennent : (a) un matériau ; (b) aucun matériau ; ou (c) le bord d'un nouveau matériau.

11. Le système selon la revendication 10, où le composant de décodage MPM scanne également les coordonnées adjacentes et vérifie les valeurs pour chaque coordonnée adjacente afin de déterminer les frontières et/ou le texte associé ou d'autres types de propriétés représentées par la MPM.

12. Le système selon la revendication 1, où le composant de post-traitement comprend un **composant de sous-système OCR,** qui exécute un processus de reconnaissance optique de caractères sur les emplacements de coordonnées associés aux caractéristiques identifiées par la MPM.

13. Le système selon la revendication 1, où un **composant d'assurance qualité** fournit une image traitée interactive où les coordonnées de chaque caractéristique identifiée sur le dessin sont utilisées pour mettre en évidence les caractéristiques afin de faciliter leur identification.

14. Le système selon la revendication 1, où le système comprend en outre un **composant de données d'entraînement** qui reçoit les dessins 2D ainsi que les nomenclatures générées (BOMs) via le décodeur MPM ; les dessins 2D et les BOMs générées étant réinjectés dans un ensemble de données d'entraînement pour les caractéristiques actuelles.

15. Un procédé de détermination des besoins en matériaux à partir d'un dessin 2D, le procédé comprenant les étapes suivantes :
Réception et prétraitement d'un ou plusieurs dessins 2D afin de fournir une ou plusieurs images traitées ;
Détermination du type de l'image traitée parmi une ou plusieurs catégories de types de dessins à l'aide d'un ou plusieurs réseaux neuronaux convolutifs pré-entraînés ;
Réception de la catégorie des types de dessins et détermination d'un réseau neuronal pré-entraîné d'identification de matériaux à appliquer à l'image traitée
Génération d'une matrice multidimensionnelle de valeurs associées à l'image traitée, chaque valeur représentant la probabilité qu'une caractéristique soit présente dans l'image traitée ;
Génération d'une ou plusieurs matrices multidimensionnelles sous forme de MPMs pour l'image traitée ;
Décodage des MPMs pour produire un ou plusieurs objets de données pour chaque caractéristique trouvée dans l'image traitée ; et
Sortie d'une ou plusieurs des informations suivantes : un identifiant unique pour chaque caractéristique, une liste de coordonnées indiquant la position de la caractéristique, ou une liste de coordonnées décrivant l'emplacement du texte ou des informations codées associées à la caractéristique.
